# EUROPEAN PATENT SPECIFICATION

(11) **EP 4 458 903 B1**
(45) Date of publication and mention of the grant of the patent: **25.02.2026**
(21) Application number: 22915574.2
(22) Date of filing: 18.11.2022
(51) Int. Cl.: C08L 67/02, C08J 3/20, C08J 3/215, C08K 3/01, C08K 3/34, C08K 3/40, C08K 5/1515, C08K 5/1539, C08K 5/29, C08K 5/353, C08K 7/02, C08L 101/02

(54) **THERMOPLASTIC POLYESTER RESIN COMPOSITION, METHOD FOR PRODUCING THERMOPLASTIC POLYESTER RESIN COMPOSITION, AND MOLDED ARTICLE**
THERMOPLASTISCHE POLYESTERHARZZUSAMMENSETZUNG, VERFAHREN ZUR HERSTELLUNG EINER THERMOPLASTISCHEN POLYESTERHARZZUSAMMENSETZUNG UND FORMKÖRPER
COMPOSITION DE RÉSINE DE POLYESTER THERMOPLASTIQUE, PROCÉDÉ DE PRODUCTION DE LADITE COMPOSITION, ET ARTICLE MOULÉ

(30) Priority: 27.12.2021 JP 2021212186; 20.06.2022 JP 2022098610
(43) Date of publication of application: 06.11.2024
(73) Proprietor: Toray Industries, Inc., Tokyo 103-8666 (JP)
(72) Inventor: TOJO, Yusuke, Nagoya-shi, Aichi 455-8502 (JP); MIYAMOTO, Kohei, Nagoya-shi, Aichi 455-8502 (JP); UMETSU, Hideyuki, Nagoya-shi, Aichi 455-8502 (JP)
(74) Representative: Mewburn Ellis LLP
(86) International application number: PCT/JP2022/042832
(87) International publication number: WO 2023/127343

(56) References cited:
- EP-A1- 4 006 103
- WO-A1-2021/013115
- JP-A- 2008 106 217
- JP-A- 2009 132 861
- JP-A- 2016 216 530

## Description

### Technical Field

The present invention relates to a thermoplastic polyester resin composition, a method of producing a thermoplastic polyester resin composition, and a molded product.

### Background Art

Thermoplastic polyester resins, especially polybutylene terephthalate-based resins, are widely used as injection molded products in the fields of mechanical parts, electrical and communication parts, and automobile parts, taking advantage of their excellent injection molding properties, mechanical properties, heat resistance, electrical characteristic, chemical resistance, etc. However, in spite of good molding efficiency of the injection molded products, there are restrictions on the shapes of products that can be molded due to their flow characteristics and mold construction, and it is difficult to mold very intricate products.

Conventionally, bonding with adhesives, mechanical bonding with bolts, etc., have been used to bond individual parts of product whose shapes become more intricate. However, bonding with adhesives does not provide sufficient strength, and mechanical bonding with bolts or the like poses problems such as increased cost, labor for bolting, and weight of the product. On the other hand, external heat welding such as laser welding and hot plate welding, and friction welding such as vibration welding and ultrasonic welding can offer bonding in a short time. In addition, since these methods utilize no adhesive nor metal parts, they are free from problems such as increased cost and weight of products and environmental pollution. Therefore, these methods are increasingly used for bonding.

A laser welding, an external heat welding, is a method of melting and fusing the resin by irradiating stacked resin moldings with laser beam, the one resin molding letting the laser pass through while the other resin molding absorbing it, and is prevailing in a wide range of fields, taking advantage of its advantages such as ability of three-dimensional bonding, ability of noncontact processing, free from generating burrs, and the like.

The polybutylene terephthalate-based resins, which are used in wide variety of applications for their high dimensional stability and low water absorbency, have extremely lower laser transmission compared to the polyamide resins. Therefore, when the laser welding method is applied using the polybutylene terephthalate-based resin as the molded product that lets laser beam pass through, the thickness limit of the molded product is very strict, and the molded product is required to be made thinner to improve laser transmission, resulting in less flexibility in product design.

The thermoplastic polyester resins degrade upon hydrolysis, and in order to be used as industrial materials for mechanical parts, electrical and communication parts, automobile parts, and the like, they are required to have long-term hydrolysis resistance in addition to mechanical properties and laser transmission.

To address the above problem, Patent Literature 1 discloses a method of adding an alkali metal salt of aliphatic carboxylic acid to a polyester resin to improve laser transmission.

Patent Literature 2 discloses a method of obtaining a resin composition including a polyester resin containing repeating units in which a terephthalic acid residue and a 1,4-cyclohexanedimethanol residue are bonded, the repeating units accounting for 25 mol% or more of the polyester resin.

Patent Literature 3 discloses a polyester resin composition, comprising a polybutylene terephthalate resin and a polycyclohexylenedimethylene terephthalate glycol resin containing 50 mol%, based on the total of diol units, of 1,4-cyclohexanedimethanol moieties, wherein the thermoplastic polyester resin composition has a melting point of 220°C.

### Citation List

### Patent Literature

Patent Literature 1: Japanese Patent Application Laid-open (Translation of PCT Application) No. 2014-512420
Patent Literature 2: Japanese Patent Application Laid-open No. 2008-106217
Patent Literature 3: WO 2021/013115 A1

### Summary of Invention

### Technical Problem

In Patent Literature 1, although variation in laser transmittance is small and laser transmittance is good, addition of alkali metal salts leads to thermal decomposition of the polyester resin during production of thermoplastic molding material, which increases carboxyl terminal groups, resulting in problems of reduced strength and reduced hydrolysis resistance.

In Patent Literature 2, although laser transmittance is high, the polyester resin included as an amorphous resin produces insufficiently crystallized regions during molding, resulting in large variation in laser transmittance. Therefore, it is necessary to adjust laser output depending on the region of the molded product when the laser welding is applied. In addition, there is a problem in that the dimensions of the molded product change during welding, that is, the dimensional stability is low, resulting in difficulty in application to welding methods. Furthermore, heat resistance and hydrolysis resistance of the molded product are insufficient.

Therefore, it is an object of the present invention to provide a thermoplastic polyester resin composition and a molded product thereof having excellent laser transmittance with minimized variation in laser transmittance, and excellent mechanical strength, hydrolysis resistance, heat resistance, and dimensional stability. Solution to Problem

In order to solve the above problems, the preset invention includes the following configurations.
[1] A thermoplastic polyester resin composition, including 10 parts by weight or more and 80 parts by weight or less of a polyester resin (B) containing 50 to 90 mol% of a structure in which a terephthalic acid residue and a 1,4-cyclohexanedimethanol residue are bonded, with respect to 100 parts by weight of a polybutylene terephthalate-based resin (A),
   wherein the thermoplastic polyester resin composition has a melting point of 222°C or more and 230°C or less as measured using a differential scanning calorimeter at heating and cooling rates of 20 °C/min, and has a cold crystallization temperature of 170°C or more and 200°C or less as measured under the same condition.
[2] The thermoplastic polyester resin composition according to [1], wherein an average diameter of spherulites of the polybutylene terephthalate-based resin observed with a transmission electron microscope is 200 nm or more and 800 nm or less.
[3] The thermoplastic polyester resin composition according to [1] or [2], wherein a carboxyl group content determined by titration with ethanolic potassium hydroxide after dissolving the composition in an o-cresol/chloroform solvent (mixing volume ratio = 2/1) is 30 eq/t or less.
[4] The thermoplastic polyester resin composition according to any one of [1] to [3], further including 0.01 to 0.8 parts by weight of a nucleating agent (C) having an average particle size of 10 µm or less, with respect to 100 parts by weight of the polybutylene terephthalate-based resin (A).
[5] The thermoplastic polyester resin composition according to any one of [1] to [4], further including 0.1 to 5 parts by weight of a chain coupling agent (D) having any two or more groups selected from the group consisting of epoxy groups, isocyanate groups, carbodiimide groups, oxazoline groups, and acid anhydride groups, with respect to 100 parts by weight of the polybutylene terephthalate-based resin (A).
[6] The thermoplastic polyester resin composition according to any one of [1] to [5], further including 1 to 100 parts by weight of a fibrous reinforcing filler (E), with respect to 100 parts by weight of the polybutylene terephthalate-based resin (A).
[7] The thermoplastic polyester resin composition according to [5] or [6],
   wherein the chain coupling agent (D) is a cresol-novolac type epoxy resin, or a dicyclopentadiene type epoxy resin.
[8] The thermoplastic polyester resin composition according to any one of [1] to [7], wherein the polybutylene terephthalate-based resin (A) is a polybutylene terephthalate resin combined with a monovalent aliphatic alcohol having carbon number of 10 or more and 50 or less in an amount of 0.1 to 2.0 mol% with respect to 100 mol% of terephthalic acid-derived structural units.
[9] A method of producing the thermoplastic polyester resin composition according to any one of [1] to [8], including:
   providing the polybutylene terephthalate-based resin (A), the polyester resin (B) containing 50 to 90 mol% of the structure in which the terephthalic acid residue and the 1,4-cyclohexanedimethanol residue are bonded, and components to be added thereto as needed; and
   melt kneading these resins and additives with a molten resin temperature at a discharge part being controlled to 315°C or less.
[10] A molded product including the thermoplastic polyester resin composition according to any one of [1] to [8].

### Advantageous Effects of Invention

By using the thermoplastic polyester resin composition of the present invention, a molded product having high laser transmittance with minimized variation in laser transmittance, and excellent mechanical strength, hydrolysis resistance, and dimensional stability can be obtained. Therefore, the thermoplastic polyester resin composition of the present invention is useful, especially as the laser transmissive molding, when the resin molding for various applications is laser welded.

### Brief Description of Drawings

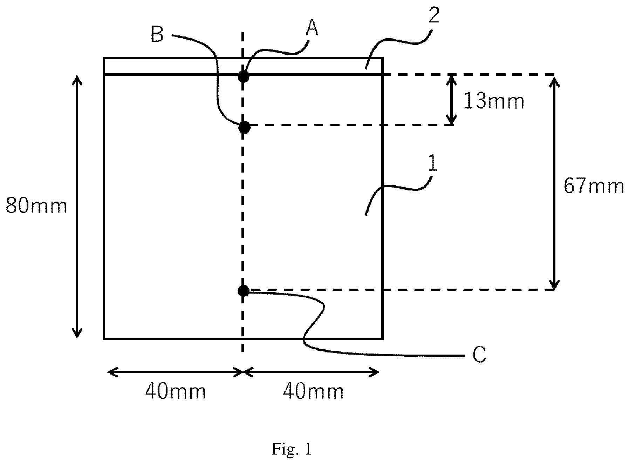

FIG. 1 is a schematic diagram showing the test specimen for evaluating laser transmittance and the measurement sites for evaluating variation in laser transmittance.

### Description of Embodiments

The thermoplastic polyester resin composition of the present invention is a thermoplastic polyester resin composition, including 10 parts by weight or more and 80 parts by weight or less of a polyester resin (B) (hereinafter, it may be referred to as "component (B)") containing 50 to 90 mol% of a structure in which a terephthalic acid residue and a 1,4-cyclohexanedimethanol residue are bonded, with respect to 100 parts by weight of a polybutylene terephthalate-based resin (A) (hereinafter, it may be referred to as "component (A)"). Furthermore, by setting the melting point to 222°C or more and 230°C or less as measured by the method described below using a differential scanning calorimeter under conditions of heating and cooling rates of 20°C/min, and by setting the cold crystallization temperature to 170°C or more and 200°C or less as measured under the same conditions, crystals of the polybutylene terephthalate-based resin (A) can be uniformly refined, developing excellent laser transmittance, mechanical properties, heat resistance, hydrolysis resistance, and dimensional stability while reducing variation in laser transmittance in the molded product, and thereby attaining the effects of the present invention. In the present invention, the terephthalic acid residue refers to a terephthaloyl structure (-CO-Ph-CO-, where Ph is a paraphenylene group), and the 1,4-cyclohexanedimethanol residue refers to an oxymethylene-1,4-cyclohexylene methyleneoxy structure.

The thermoplastic polyester resin composition of the present invention includes a reaction product resulting from the reaction of components (A) and (B). The reaction product is produced by a complex reaction such as a transesterification reaction between the main chain of the polybutylene terephthalate-based resin (A) and the polyester resin (B) containing 50 to 90 mol% of a structure in which a terephthalic acid residue and a 1,4-cyclohexanedimethanol residue are bonded, and there are some circumstances that make it impractical to specify the structure. Therefore, the present invention is specified by the components to be included.

In the present invention, as the polybutylene terephthalate-based resin (A), either of polybutylene terephthalate or a polybutylene terephthalate copolymer, or a combination thereof may be used.

Polybutylene terephthalate is a polymer obtained by a polycondensation reaction between terephthalic acid (or an ester-forming derivative thereof such as dimethyl terephthalate) and 1,4-butanediol (or an ester-forming derivative thereof).

A polybutylene terephthalate copolymer is a polymer obtained by polymerization between terephthalic acid (or an ester-forming derivative such as dimethyl terephthalate) and 1,4-butanediol (or an ester-forming derivative thereof) in the presence of other dicarboxylic acid (or an ester-forming derivative thereof) or other glycol (or an ester-forming derivative thereof) which is copolymerizable with them.

Specific examples of copolymerizable dicarboxylic acid include isophthalic acid, orthophthalic acid, 2,6-naphthalenedicarboxylic acid, cyclohexanedicarboxylic acid, oxalic acid, malonic acid, succinic acid, itaconic acid, adipic acid, sebacic acid, azelaic acid, dodecanedioic acid, dimer acid, and ester-forming derivatives thereof, but are not limited thereto, and any copolymerizable substance can be used. Two or more types may also be used simultaneously. The percentage of the copolymerizable dicarboxylic acid in the total dicarboxylic acid components is preferably in the range of 3 to 30 mol% from the viewpoint of moldability, and more preferably in the range of 3 to 20 mol%.

On the other hand, examples of copolymerizable glycol include ethylene glycol, propylene glycol, nonanediol, neopentyl glycol, tetramethylcyclobutanediol, isosorbide, dimer diol, polyethylene glycol, polytetramethylene glycol, 2,2-bis(4-hydroxyphenyl)propane, hydroquinone, resorcinol, 1,1-bis(4-hydroxyphenyl)cyclohexane, 2,2-bis(3-methyl-4-hydroxyphenyl)propane, but are not limited thereto, and any copolymerizable substance can be used. Two or more types may also be used simultaneously. The percentage of the copolymerizable glycol other than 1,4-butanediol in the total glycol components is preferably in the range of 3 to 30 mol% from the viewpoint of moldability, and more preferably in the range of 3 to 20 mol%.

Examples of other copolymerizable components include trimellitic acid, pyromellitic acid, glycerin, trimethylolpropane, pentaerythritol, p-hydroxybenzoic acid, ε-caprolactone, γ-butyrolactone and the like.

The polybutylene terephthalate-based resin (A) used in the present invention is preferably a polybutylene terephthalate resin chemically combined with monovalent aliphatic alcohol having carbon number of 10 or more and 50 or less and amount of the monovalent aliphatic alcohol unit is 0.1 to 2.0 mol% with respect to 100 mol% of terephthalic acid-derived structural units. Application of such a polybutylene terephthalate-based resin is preferable because the laser transmittance of the obtained thermoplastic polyester resin composition and the dimensional stability of the molded product are improved. From the viewpoint of improved laser transmission and dimensional stability, the amount of the aliphatic alcohol to be compounded is preferably 0.5 mol% or more, more preferably 0.7 mol% or more with respect to 100 mol% of the terephthalic acid-derived structural unit. Further, the amount is preferably 1.8 mol% or less, more preferably 1.6 mol% or less.

The above-described aliphatic alcohol having carbon number of 10 or more and 50 or less is a monofunctional alcohol compound having a hydrocarbon main chain consisting of carbon atoms and hydrogen atoms, and one hydroxyl group, and may have a linear, branched, or cyclic structure in the chain-like structure of carbon atoms. Examples include alcohol compounds having linear saturated aliphatic groups such as decyl group (C10), undecyl group (C11), dodecyl group (C12), tridecyl group (C13), tetradecyl group (C14), pentadecyl group (C15), hexadecyl group (C16), heptadecyl group (C17), octadecyl group (C18), nonadecyl group (C19), icosyl group (C20), henicosyl group (C21), docosyl group (C22), tricosyl group (C23), tetracosyl group (C24), pentacosyl group (C25), hexacosyl group (C26), heptacosyl group (C27), octacosyl group (C28), triacontyl group (C30), and tetracontyl group (C40); alcohol compounds having branched saturated aliphatic groups such as butylhexyl group (C10), butyloctyl group (C12), hexyloctyl group (C14), hexyldecyl group (C16), octyldecyl group (C18), hexyldodecyl group (C18), trimethylbutyltrimethyloctyl group (C18), butyltetradecyl group (C18), hexyltetradecyl group (C20), octyltetradecyl group (C22), octylhexadecyl group (C24), decyltetradecyl group (C24), dodecyltetradecyl group (C26), dodecylhexadecyl group (C28), dodecylhexadecyl group (C28), tetradecyloctadecyl group (C32), and hexadecylicosacyl group (C36); and alcohol compounds having unsaturated aliphatic groups such as palmitoleyl group (C16), oleyl group (C18), linoleyl group (C18), and erucyl group (C22). In the above description, the number after "C" represents the number of carbon atoms included in the group. Among them, a linear or branched saturated aliphatic group is preferred from the viewpoint of color tone, and a branched saturated aliphatic group is preferred from the viewpoint of improving laser transmission and dimensional stability. When the carbon number of the aliphatic group is 10 or more and 50 or less, the effect of improving flowability can be obtained. The lower limit of the carbon number is preferably 16 or more, more preferably 20 or more, from the viewpoint of further improving flowability. The upper limit of the carbon number is preferably 36 or less, more preferably 30 or less.

The polybutylene terephthalate-based resin (A) used in the present invention is preferably a terminal modified polybutylene terephthalate-based resin having a branched saturated aliphatic group having carbon number of 16 or more and 36 or less at its molecular end, among the above-described groups, the preferable concentration of the functional group being 0.005 mmol/g or more and less than 0.20 mmol/g. It is preferable that the functional group concentration of the saturated aliphatic group be 0.005 mmol/g or more because flowability can be improved. The functional group concentration of the saturated aliphatic group is more preferably 0.010 mmol/g or more, still more preferably 0.020 mmol/g or more. On the other hand, it is preferable that the functional group concentration of the saturated aliphatic group be less than 0.20 mmol/g because mechanical properties and heat resistance can be improved. The functional group concentration of the saturated aliphatic group is more preferably less than 0.18 mmol/g, still more preferably less than 0.15 mmol/g.

In the present invention, the functional group concentration of the aliphatic group present at the end of the molecule is a value determined from integration ratio of the peaks derived from the terminal group measured by ¹H-NMR using deuterated hexafluoroisopropanol as a solvent.

A carboxylic acid group concentration of the polybutylene terephthalate-based resin (A) used in the present invention is preferably 35 eq/t or less, more preferably 30 eq/t or less, still more preferably 20 eq/t or less, from the viewpoint of suppressing reduction in melting point and cold crystallization temperature due to the transesterification reaction with the component (B) and suppressing variation in laser transmittance. The lower limit of the carboxylic acid group concentration is 0 eq/t. The carboxylic acid group concentration of the polybutylene terephthalate-based resin (A) is a value measured by titration with ethanolic potassium hydroxide after dissolving the polybutylene terephthalate-based resin (A) in an o-cresol/chloroform solvent (mixing volume ratio = 2/1).

The polybutylene terephthalate-based resin (A) used in the present invention preferably has a weight average molecular weight (Mw) of 8,000 or more from the viewpoint of further improving mechanical properties. The weight average molecular weight (Mw) is preferably 500,000 or less because flowability can be improved. The weight average molecular weight (Mw) is more preferably 300,000 or less, still more preferably 250,000 or less. In the present invention, the weight average molecular weight (Mw) of the thermoplastic polyester resin (A) is a value in terms of polymethyl methacrylate (PMMA) measured by Gel Permeation Chromatography (GPC) using hexafluoroisopropanol as a solvent.

The intrinsic viscosity of the polybutylene terephthalate-based resin (A) used in the present invention as measured in an o-chlorophenol solution at 25°C is preferably 0.36 dl/g or more, more preferably 0.50 dl/g or more, from the viewpoint of further improving mechanical properties. Further, the intrinsic viscosity is preferably 1.60 dl/g or less, more preferably 1.50 dl/g or less, from the viewpoint of improving flowability.

The polybutylene terephthalate-based resin (A) used in the present invention can be produced by a known polycondensation method, ring-opening polymerization method, or the like. The production method may be either batch polymerization or continuous polymerization. Alternatively, either transesterification reaction or reaction by direct polymerization can be applied. However, from the viewpoint of productivity, continuous polymerization is preferably used, and direct polymerization is more preferably used.

The polybutylene terephthalate-based resin (A) used in the present invention that is a polymer or copolymer obtained by condensation reaction, mainly containing dicarboxylic acid or an ester-forming derivative thereof and diol or an ester-forming derivative thereof can be produced by an esterification reaction or transesterification reaction of dicarboxylic acid or an ester-forming derivative thereof and a diol or an ester-forming derivative thereof, followed by a polycondensation reaction.

In order to effectively promote esterification or transesterification reaction and polycondensation reaction, it is preferable to add a polymerization catalyst during these reactions. Specific examples of the polymerization catalyst include organotitanium compounds such as titanic acid methyl ester, tetra-n-propyl ester, tetra-n-butyl ester, tetraisopropyl ester, tetraisobutyl ester, tetra-tert-butyl ester, cyclohexyl ester, phenyl ester, benzyl ester, tolyl ester or mixed esters thereof; tin compounds, for example, dibutyltin oxide, methylphenyltin oxide, tetraethyltin, hexaethylditin oxide, cyclohexahexylditin oxide, didodecyltin oxide, triethyltin hydroxide, triphenyltin hydroxide, triisobutyltin acetate, dibutyltin diacetate, diphenyltin dilaurate, monobutyltin trichloride, dibutyltin dichloride, tributyltin chloride, dibutyltin sulfide, butylhydroxytin oxide, alkyl stannoate such as methyl stannoate, ethyl stannoate, and butyl stannoate; zirconia compounds such as zirconium tetra-n-butoxide; and antimony compounds such as antimony trioxide and antimony acetate. These may be used in combination of two or more kinds thereof.

Among these polymerization catalysts, organotitanium compounds and tin compounds are preferred, and titanic acid tetra-n-butyl ester is more preferably used. The addition amount of the polymerization catalyst is preferably in the range of 0.01 parts by weight or more and 0.2 parts by weight or less with respect to 100 parts by weight of the polybutylene terephthalate-based resin (A).

The polyester resin (B) containing 50 to 90 mol% of a structure in which a terephthalic acid residue and a 1,4-cyclohexanedimethanol residue are bonded, used in the present invention, is a copolymer obtained by copolymerizing terephthalic acid or an ester-forming derivative thereof, 1,4-cyclohexanedimethanol or an ester-forming derivative thereof, and monomers that can be copolymerized with them so that the content of the residues of terephthalic acid or an ester-forming derivative thereof and 1,4-cyclohexanedimethanol or an ester-forming derivative thereof is 50 to 90 mol%. When the content of the structure in which the terephthalic acid residue and the 1,4-cyclohexanedimethanol residue are bonded is less than 50 mol% or more than 90 mol%, compatibility with the polybutylene terephthalate-based resin (A) decreases and the crystals of the polybutylene terephthalate-based resin (A) cannot be refined, resulting in insufficient laser transmittance. Furthermore, the total of the residue of the terephthalic acid or the ester-forming derivative thereof and the residue of the 1,4-cyclohexanedimethanol or the ester-forming derivative thereof is preferably 60 mol% or more, more preferably 65 mol% or more, from the viewpoint of improving hydrolysis resistance. On the other hand, 85 mol% or less is preferred, and 80 mol% or less is more preferred from the viewpoint of improving laser transmittance. As described above, when only terephthalic acid is used as the dicarboxylic acid component, the mole fraction of 1,4-cyclohexanedimethanol in the diol component is equal to the mole fraction of the structure in which terephthalic acid residue and 1,4-cyclohexanedimethanol residue are bonded in the entire structural unit in which terephthalic acid and diol are bonded. Of course, the present invention does not preclude the use of dicarboxylic acid components other than terephthalic acid as the polyester resin (B) containing 50 to 90 mol% of a structure in which a terephthalic acid residue and a 1,4-cyclohexanedimethanol residue are bonded. In accordance with the gist of the present invention, as for the component (B), the product of a molar ratio of the terephthalic acid residue to the total dicarboxylic acid residues (number of moles of terephthalic acid residue/number of moles of total dicarboxylic acid residues) and the molar ratio of the 1,4-cyclohexanedimethanol residue to the total diol residues (number of moles of 1,4-cyclohexanedimethanol residue/number of moles of total diol residues) is 0.5 to 0.9, preferably 0.6 to 0.8.

The monomers that can be copolymerized with the component (B) are the same as those exemplified in the description of the polybutylene terephthalate-based resin (A). In particular, copolymers with any one of ethylene glycol, tetramethylcyclobutanediol, or isosorbide are preferable, and copolymers with ethylene glycol are even more preferable from the viewpoint of improving heat resistance and laser transmittance.

The component (B) can be produced by esterification reaction or transesterification reaction, followed by polycondensation reaction, similarly to the polybutylene terephthalate-based resin (A).

In the present invention, the compounded amount of the component (B) is from 10 parts by weight to 80 parts by weight with respect to 100 parts by weight of the polybutylene terephthalate-based resin (A). When the compounded amount is less than 10 parts by weight, laser transmittance will be insufficient, and when the compounded amount is more than 80 parts by weight, heat resistance will be insufficient. Furthermore, the lower limit of the compounded amount of the component (B) is preferably 20 parts by weight or more, more preferably 30 parts by weight or more. On the other hand, the upper limit of the compounded amount of the component (B) is preferably 70 parts by weight or less, more preferably 60 parts by weight or less.

It is preferable that thermoplastic polyester resin composition of the present invention further include 0.01 to 0.8 parts by weight of the nucleating agent (C) having an average particle size of 10 µm or less is preferably included with respect to 100 parts by weight of the polybutylene terephthalate-based resin (A) from the viewpoint of reducing variation in laser transmittance. The lower limit of the compounded amount of nucleating agent (C) is preferably 0.05 parts by weight or more, more preferably 0.08 parts by weight or more with respect to 100 parts by weight of the polybutylene terephthalate-based resin (A), from the viewpoint of further reducing variation in laser transmittance and improving heat resistance. On the other hand, the upper limit of the compounded amount of nucleating agent (C) is more preferably 0.5 parts by weight or less, still more preferably 0.3 parts by weight or less with respect to 100 parts by weight of the polybutylene terephthalate-based resin (A), from the viewpoint of improving hydrolysis resistance.

As the nucleating agent (C), inorganic particles such as mica, talc, kaolin, and metal oxides, and organic particles having a melting point of 280°C or more are preferred. Among them, talc is more preferred.

The average particle size of the nucleating agent (C) is preferably 10 µm or less, more preferably 5 µm or less, and still more preferably 4 µm or less from the viewpoint of improving laser transmittance. The lower limit is not particularly limited, but is preferably 0.1 µm or more from the viewpoint of improving hydrolysis resistance. The average particle size is a particle diameter value at 50% accumulation in the cumulative distribution on volume basis, as determined by particle diameter measurement with a laser particle size distribution analyzer SALD-2000 manufactured by SHIMADZU CORPORATION.

In addition, alkali metal salts used as nucleating agents in the above-mentioned Patent Literature 1 and the like excessively accelerate transesterification reaction between the polybutylene terephthalate-based resin (A) and the component (B), thereby increasing variation in laser transmittance and reducing heat resistance. Therefore, the compounded amount of the alkali metal salt in the thermoplastic polyester resin composition of the present invention is preferably less than 0.03 parts by weight with respect to 100 parts by weight of the polybutylene terephthalate-based resin (A).

In the thermoplastic polyester resin composition of the present invention, end groups of the polybutylene terephthalate-based resin (A) and the component (B) are linked by reaction, thereby increasing compatibility, suppressing excessive transesterification reaction, reducing variation in laser transmittance, and improving laser transmittance. In this regard, it is preferable that 0.1 to 5 parts by weight of the chain coupling agent (D) having any two or more groups selected from the group consisting of epoxy groups, isocyanate groups, carbodiimide groups, oxazoline groups, and acid anhydride groups be further included with respect to 100 parts by weight of the polybutylene terephthalate resin (A). The lower limit of the compounded amount of the chain coupling agent (D) is more preferably 0.5 parts by weight or more, and still more preferably 1 part by weight or more with respect to 100 parts by weight of the polybutylene terephthalate-based resin (A). On the other hand, the upper limit of the compounded amount of the chain coupling agent (D) is more preferably 4 parts by weight or less, still more preferably 3 parts by weight or less, with respect to 100 parts by weight of the polybutylene terephthalate-based resin (A).

Examples of the chain coupling agent (D) include difunctional or multifunctional epoxy compounds, isocyanate compounds, carbodiimide compounds, oxazoline compounds, and acid anhydride group-containing compounds. These may be used in combination of two or more kinds thereof.

Examples of the epoxy compound include glycidyl ether type epoxy resins, glycidyl ester type epoxy resins, glycidyl amine type epoxy resins, alicyclic epoxy resins, heterocyclic epoxy resins, and glycidyl group-containing vinyl-based polymer.

Examples of the glycidyl ether type epoxy resin include epoxy resins produced from epichlorohydrin and bisphenol A, epoxy resins produced from epichlorohydrin and bisphenol F, phenol-novolac type epoxy resins produced by reacting novolac resin with epichlorohydrin, cresol-novolac type epoxy resins, naphthol-novolac type resins, glycerol triglycidyl ether, trimethylolpropane triglycidyl ether, pentaerythritol polyglycidyl ether, dicyclopentadiene type epoxy resins, and biphenyldimethylene type epoxy resins.

Examples of the glycidyl ester type epoxy resin include epoxy resins produced from epichlorohydrin and any one selected from phthalic acid, tetrahydrophthalic acid, p-oxybenzoic acid, and dimer acid, trimesic acid triglycidyl ester, trimellitic acid triglycidyl ester, and pyromellitic acid tetraglycidyl ester.

Examples of the glycidyl amine type epoxy resin include epoxy resins produced from epichlorohydrin and any one selected from aniline, diaminodiphenylmethane, p-aminophenol, meta-xylylene diamine, and 1,3-bis(aminomethyl)cyclohexane, tetraglycidyl aminodiphenylmethane, triglycidyl-para-aminophenol, triglycidyl-meta-aminophenol, tetraglycidyl-meta-xylene diamine, tetraglycidyl-bis-aminomethylcyclohexane, triglycidyl cyanurate, triglycidyl isocyanurate, and naphthalene.

Examples of the alicyclic epoxy resin include compounds containing cyclohexene oxide group, tricyclodecene oxide group, and cyclopentene oxide group.

Examples of the heterocyclic epoxy resin include epoxy resins produced from epichlorohydrin and hydantoin or isocyanuric acid.

Examples of the glycidyl group-containing vinyl-based polymer include those obtained by radical polymerization of raw monomers forming glycidyl group-containing vinyl-based units. Specific examples of the raw monomers forming the glycidyl group-containing vinyl-based units include unsaturated monocarboxylic acid glycidyl esters such as glycidyl (meth)acrylate and glycidyl p-styrylcarboxylate, monoglycidyl esters or polyglycidyl esters of unsaturated polycarboxylic acids such as maleic acid and itaconic acid, unsaturated glycidyl ethers such as allyl glycidyl ether, 2-methylallyl glycidyl ether, and styrene-4-glycidyl ether.

Among them, glycidyl ether-based compounds are preferred from the viewpoint of suppressing reaction between epoxy groups in the compound used as the chain coupling agent (D) and achieving efficient reaction between the end groups of the polybutylene terephthalate-based resin (A) and the component (B). Among them, cresol-novolac type epoxy resins and dicyclopentadiene type epoxy resins are more preferable, and dicyclopentadiene type epoxy resins are still more preferable from the viewpoint of improving hydrolysis resistance.

Examples of the carbodiimide compound include dicarbodiimides such as N,N'-diisopropylcarbodiimide, N,N'-dicyclohexylcarbodiimide, N,N'-di-2,6-diisopropylphenylcarbodiimide, and polycarbodiimides such as poly(1,6-hexamethylenecarbodiimide), poly(4,4'-methylenebiscyclohexylcarbodiimide), poly(1,3-cyclohexylenecarbodiimide), poly(1,4-cyclohexylenecarbodiimide), poly(4,4'-dicyclohexylmethanecarbodiimide), poly(4,4'-diphenylmethanecarbodiimide), poly(3,3'-dimethyl-4,4'-diphenylmethanecarbodiimide), poly(naphthalenecarbodiimide), poly(p-phenylenecarbodiimide), poly(m-phenylenecarbodiimide), poly(tolylcarbodiimide), poly(diisopropylcarbodiimide), poly(methyl-diisopropylphenylenecarbodiimide), poly(1,3,5-triisopropylbenzene)polycarbodiimide, poly(1,5-diisopropylbenzene)polycarbodiimide, poly(triethylphenylenecarbodiimide), poly(triisopropylphenylenecarbodiimide).

Examples of the oxazoline compound include oxazoline group-containing compounds such as 2,2'-bis(2-oxazoline), 2,2'-ethylene-bis(4,4'-dimethyl-2-oxazoline), 2,2'-p-phenylene-bis(2-oxazoline), and bis(2-oxazolinylcyclohexane)sulfide, and oxazoline group-containing polymers.

Examples of the isocyanate compound include diphenylmethane diisocyanate (MDI), tolylene diisocyanate (TDI), xylene diisocyanate (XDI), isophorone diisocyanate (IPDI), naphthylene diisocyanate (NDI), tolidine diisocyanate (TPDI), hexamethylene diisocyanate (HDI), dicyclohexylmethane diisocyanate (HMDI), and trimethylhexamethylene diisocyanate (TMHDI).

Examples of the acid anhydride group-containing compound include copolymerized polymers of maleic anhydride and unsaturated hydrocarbons such as ethylene and propylene or vinyl compounds such as styrene, for example, 1,1-bis(2,3-dicarboxyphenyl)ethane dianhydride, bis(2,3-dicarboxyphenyl)methane dianhydride, bis(3,4-dicarboxyphenyl)methane dianhydride, 3,3',4,4'-biphenyltetracarboxylic dianhydride, 2,2-bis(3,4-dicarboxyphenyl)propane dianhydride, 2,2-bis(2,3-dicarboxyphenyl)propane dianhydride, bis(3,4-dicarboxyphenyl)ether dianhydride, bis(2,3-dicarboxyphenyl)ether dianhydride, 3,3',4,4'-benzophenone tetracarboxylic dianhydride, 2,2',3,3'-benzophenone tetracarboxylic dianhydride, 4,4'-oxydiphthalic dianhydride, 4,4-(p-phenylenedioxy)diphthalic dianhydride, 4,4-(m-phenylenedioxy)diphthalic dianhydride, 2,2',6,6'-biphenyltetracarboxylic dianhydride, 1,2,5,6-naphthalenedicarboxylic dianhydride, 1,4,5,8-naphthalenedicarboxylic dianhydride, 2,3,6,7-naphthalenedicarboxylic dianhydride, 3,4,9,10-perylenetetracarboxylic dianhydride, 2,3,6,7-anthracenetetracarboxylic dianhydride, 1,2,7,8-phenanthrenetetracarboxylic dianhydride, 3,3',4,4'-biscyclohexanetetracarboxylic dianhydride, 1,2,3,4-cyclobutanetetracarboxylic dianhydride, 1,2,3,4-cyclopentanetetracarboxylic dianhydride, 1,2,4,5-cyclohexanetetracarboxylic dianhydride, 1,2,3,4-tetramethyl-1,2,3,4-cyclobutanetetracarboxylic dianhydride, tricyclo[6.4.0.0(2,7)]dodecane-1,8:2,7-tetracarboxylic dianhydride, bicyclo[2.2.2]oct-7-ene-2,3,5,6-tetracarboxylic dianhydride.

The thermoplastic polyester resin composition of the present invention preferably includes the fibrous reinforcing filler (E). Inclusion of the fibrous reinforcing filler (E) improves mechanical strength of the molded product while improving laser transmission. Examples of the fibrous reinforcing filler (E) include glass fibers, aramid fibers, carbon fibers, alumina fibers, silicon carbide fibers, and cellulose fibers. Among them, glass fibers can be preferably used.

The cross-section of the fibrous reinforcing filler (E) may be circular or flat. However, from the viewpoint of suppressing deformation, reducing warpage, and obtaining stable laser transmission, the cross-section is preferably flat. Generally, in a composition including the fibrous reinforcing filler (E), fibers are oriented in the flow direction during molding. Therefore, mold shrinkage ratio (percentage of difference in dimension between the resin molded product and the mold) will have increased anisotropy, resulting in greater deformation and warpage. However, when the cross-section is flat, the mold shrinkage ratio has reduced anisotropy, thereby easily improving deformation and warpage.

In the fibrous reinforcing filler (E) used in the present invention, it is preferable that an ellipticity, expressed as a ratio between the major axis (the longest straight-line distance in the cross-section) and the minor axis (the longest straight-line distance orthogonal to the major axis) in the cross-section perpendicular to the length direction be more than 1 and 10 or less. The lower limit of the ellipticity is preferably 1.3 or more, more preferably 1.5 or more. The upper limit is preferably 5 or less, more preferably 2.5 or less, most preferably 2 or less. Specific shape may be any of cocoon, ellipse, oval, semicircle, arc, rectangle, or similar shapes, but ellipse is especially preferable from the viewpoint of flowability and low warpage.

With the above-described ellipticity more than 1, deformation and warpage during molding are suppressed. With the ellipticity of 10 or less, it is difficult to even produce the fibrous reinforcing filler (E) in practice. Hollow fibers can be used as the fibrous reinforcing filler (E) for the purpose such as reduction of specific gravity. As the cross-sectional area of the fibrous reinforcing filler (E) increases, a sufficient reinforcing effect cannot be obtained. On the other hand, with too small cross-sectional area, it becomes difficult to produce the fibrous reinforcing filler per se, resulting in difficult handling. The cross-sectional area of the fibrous reinforcing filler (E) in the present invention is preferably 2 × 10⁻⁵ to 8 × 10⁻³ mm², more preferably 8 × 10⁻⁵ to 8 × 10⁻³ mm², still more preferably 8 × 10⁻⁵ to 8 × 10⁻⁴ mm².

The fiber length of the fibrous reinforcing filler (E) is not particularly limited. In view of balancing mechanical properties of the molded product and deformation control, the fiber length is preferably shorter to reduce deformation of the molded product. The fiber length is preferably 30 µm or more in view of mechanical properties, and preferably 50 to 1000 µm depending on the required performance.

In the fibrous reinforcing filler (E) used in the present invention, a sizing agent or a surface treatment agent is preferably used as needed. Examples of the sizing agent or the surface treatment agent include functional compounds such as epoxy-based compounds, isocyanate-based compounds, silane-based compounds, and titanate-based compounds. These compounds may be used after surface treatment or focusing treatment, or may be added simultaneously during material preparation. These compounds may be used after surface treatment or sizing treatment, or may be added simultaneously during material preparation.

The compounded amount of the fibrous reinforcing filler (E) used in the present invention is preferably 1 part by weight or more and 100 parts by weight or less with respect to 100 parts by weight of the thermoplastic polyester resin (A). When the compounded amount of the fibrous reinforcing filler (E) is 1 part by weight or more, mechanical strength of the molded product can be improved. The compounded amount is more preferably 10 parts by weight or more, still more preferably 20 parts by weight or more. When the compounded amount of the fibrous reinforcing filler (E) is 100 parts by weight or less, reduction in laser transmission can be suppressed. The compounded amount is more preferably 80 parts by weight or less, still more preferably 50 parts by weight or less.

The thermoplastic polyester resin composition of the present invention has a melting point of 222°C or more and 230°C or less as measured using a differential scanning calorimeter at heating and cooling rates of 20 °C/min, and a cold crystallization temperature of 170°C or more and 200°C or less as measured under the same conditions. When the melting point of the thermoplastic polyester resin composition is less than 222°C, the transesterification reaction between the polybutylene terephthalate-based resin (A) and the component (B) will be excessive, and crystallinity of the polybutylene terephthalate-based resin (A) will be remarkably reduced, resulting in increased variation in laser transmittance and insufficient heat resistance. On the other hand, when the melting point of the thermoplastic polyester resin composition is more than 230°C, the crystals of the component (B) are coarse, and laser transmittance is insufficient. The melting point of the thermoplastic polyester resin composition is preferably 223°C or more from the viewpoint of reducing variation in laser transmittance and further improving heat resistance. On the other hand, the melting point of the thermoplastic polyester resin composition is preferably 229°C or less, more preferably 228°C or less from the viewpoint of improving laser transmittance.

When the cold crystallization temperature of the thermoplastic polyester resin composition of the present invention is less than 170°C, the crystallization rate of the polybutylene terephthalate-based resin (A) is too low, and variation in crystallinity during melt processing is large, resulting in increased variation in laser transmittance. On the other hand, when the cold crystallization temperature of the thermoplastic polyester resin composition is more than 200°C, the crystallization rate of the polybutylene terephthalate-based resin (A) is too high, and the crystals of the polybutylene terephthalate-based resin (A) are coarse, resulting in insufficient laser transmittance. The cold crystallization temperature described above is preferably 172°C or more, and more preferably 180°C or more, from the viewpoint of reducing variation in laser transmittance. On the other hand, the cold crystallization temperature is preferably 197°C or less, more preferably 195°C or less, from the viewpoint of improving laser transmittance.

Examples of a means to adjust the melting point of the thermoplastic polyester resin composition to 222°C or more are not limited to the following methods, and include producing by production methods including, for example, from the viewpoint of suppressing transesterification reaction, adjusting the carboxyl group content in the polybutylene terephthalate-based resin (A) to 35 eq/t or less, adjusting the carboxyl group content in the thermoplastic polyester resin composition to 30 eq/t or less, using the chain coupling agent (D) in combination, or adjusting the temperature at the discharge part during melt kneading to 315°C or less.

Examples of a means to adjust the melting point of the thermoplastic polyester resin composition to 230°C or less include adjusting the content of the residues of the terephthalic acid or an ester-forming derivative thereof and 1,4-cyclohexanedimethanol or an ester-forming derivative thereof in the component (B) to 50 to 90 mol% from the viewpoint of suppressing crystallization of the component (B), for example.

Examples of a means to adjust the cold crystallization temperature of the thermoplastic polyester resin composition to 170°C or more are not limited to the following methods, and include producing by the production methods including, for example, including the nucleating agent (C) from the viewpoint of controlling the crystallization rate, or adjusting the temperature at the discharge part during melt kneading to 315°C or less from the viewpoint of controlling transesterification reaction.

Examples of a means to adjust the cold crystallization temperature to 200°C or less include adjusting the content of the residues of the terephthalic acid or an ester-forming derivative thereof and 1,4-cyclohexanedimethanol or an ester-forming derivative thereof in the component (B) to 50 to 90 mol% from the viewpoint of enhancing compatibility between the polybutylene terephthalate-based resin (A) and the component (B), for example.

In the thermoplastic polyester resin composition of the present invention, the average diameter of spherulites of the polybutylene terephthalate-based resin (A) observed with a transmission electron microscope is preferably 200 nm or more and 800 nm or less. When the average diameter of spherulites of the polybutylene terephthalate-based resin (A) is preferably 200 nm or more, the thermoplastic polyester resin composition has excellent heat resistance due to the crystalline components of the polybutylene terephthalate-based resin, which is preferable. The average diameter is more preferably 300 nm or more. On the other hand, when the average diameter of spherulites of the polybutylene terephthalate-based resin (A) is 800 nm or less, excessive crystallization of the polybutylene terephthalate-based resin is suppressed, and the polybutylene terephthalate-based resin has more excellent laser transmission, which is preferable. The average diameter is more preferably 700 nm or less. In the method for quantifying the average diameter of spherulites of the polybutylene terephthalate-based resin, ultrathin sections are cut out from the molded product of the thermoplastic polyester, appropriately stained samples are observed with a transmission electron microscope, spherulites are photographed, and then the number average diameter of the spherulites are calculated with an image analyzer or the like. The details are as explained in the Examples section.

The thermoplastic polyester resin composition of the present invention preferably has a carboxylic acid group concentration of 0 eq/t or more and 30 eq/t or less. When the carboxylic acid group concentration is 30 eq/t or less, transesterification reaction between the polybutylene terephthalate-based resin (A) and the component (B) during melt processing is suppressed, melting point does not decrease, and variation in laser transmittance can be reduced. The carboxylic acid group concentration is more preferably 25 eq/t or less, still more preferably 20 eq/t or less. To quantify the carboxylic acid group concentration of the thermoplastic polyester resin composition, the thermoplastic polyester resin composition is dissolved in a chloroform/o-cresol (mixing volume ratio = 1/2) regulating agent, to which is added an appropriate amount of bromothymol blue/ethanol solution, then titrated with a 0.02 N KOH methanol solution to calculate the carboxylic acid group concentration.

The thermoplastic polyester resin composition of the present invention may include the thermoplastic resins other than the components (A) and (B) in an amount not detrimental to the purpose of the present invention, and thereby improve moldability, dimension accuracy, mold shrinkage, toughness, and the like. Examples of the thermoplastic resin other than the components (A) and (B) include vinyl-based resins, polyamide resins, polyacetal resins, polyurethane resins, aromatic or aliphatic polyketone resins, polyphenylene sulfide resins, polyether ether ketone resins, polyimide resins, thermoplastic starch resins, aromatic polycarbonate resins, polyarylate resins, polysulfone resins, polyethersulfone resins, phenoxy resins, polyphenylene ether resins, polyether imide resins, cellulose acetate resins, and polyvinyl alcohol resins.

Furthermore, the thermoplastic polyester resin composition of the present invention may include other components not detrimental to the purpose of the present invention such as processing stabilizers, weather resistance agent (resorcinol-based, salicylate-based, benzophenone-based, etc.), lubricants (montanoic acid and esters thereof, half-esters thereof, stearyl alcohol, polyethylene wax, etc.), pigments, dyes, plasticizers, antistatic agents, flame retardants, anti-coloring agents, and other polymers.

The thermoplastic polyester resin composition of the present invention can be obtained, for example, by melt kneading the above-described components (A) and (B), and other components as needed.

Examples of the melt kneading method include a method in which the components (A) and (B), and various additives are premixed, then supplied to an extruder or the like, and thoroughly melt kneaded, or a method in which a predetermined amount of each component is fed to a metering feeder such as gravimetric feeder, and the components are thoroughly meld kneaded.

Examples of the above-described premixing include a dry blending method, a mixing method using a mechanical mixing device such as a tumbler, a ribbon mixer, and a Henschel mixer. Further, the fibrous reinforcing filler (E) may also be added with a side feeder being provided in the middle between a breech-loading part and a vent of a multi screw extruder such as twin screw extruder. In a case of a liquid additive, a method in which the additive is added using a plunger pump with a liquid addition nozzle being provided in the middle between a breech-loading part and a vent of a multi screw extruder such as a twin screw extruder, a method in which the additive is added from a breech-loading part or the like with a metering pump, or the like may be used.

When the resin temperature at the discharge part during melt kneading is too high, transesterification reaction between the components (A) and (B) will be excessively promoted. Therefore, the molten resin temperature at the discharge part is preferably set to 315°C or less, more preferably 310°C or less, still more preferably 305°C or less. The molten resin temperature at the discharge part is a temperature indicated using a thermocouple thermometer after pressing a thermocouple against a molten resin at the discharge part at the tip of the extrusion die for 30 seconds.

The thermoplastic polyester resin composition of the present invention is preferably pelletized before molding. Examples of a pelletizing method include methods in which components included in the thermoplastic polyester resin composition are discharged in a strand form using, for example, a single screw extruder equipped with a "unimelt" or "dulmadge" type screw, a twin screw extruder, a triple screw extruder, a conical extruder, and a kneader-type kneading machine, then cut with a strand cutter.

By subjecting the thermoplastic polyester resin composition of the present invention to a cavity perturbation method, a molded product in a shape of film, fiber, and the like can be obtained. Examples of the cavity perturbation method include injection molding, extrusion molding, and blow molding, and injection molding is particularly preferably used.

In addition to the ordinary injection molding methods, gas-assisted molding, two-color molding, sandwich molding, in-mold molding, insert molding, and injection press molding are known as injection molding methods, and any of them may be applied.

The molded product of the present invention can be utilized for various applications including mechanical parts, electrical parts, electronic parts, and automobile parts taking advantages of its excellent mechanical properties and hydrolysis resistance. Further, the molded product of the present invention can be laser welded because of its high laser transmission, and therefore it is also suitable for automobile parts, electrical and electronic parts that are laser welded.

Specific examples of the mechanical parts, electrical parts, electronic parts, and automobile parts include breakers, electromagnetic switches, focus cases, flyback transformers, molded products for fixing units of copiers and printers, general consumer electronics, housings for office automation equipment, parts of variable condenser cases, various terminal boards, transformers, printed circuit boards, housings, terminal blocks, coil bobbins, connectors, relays, disk drive chassis, switch parts, outlet parts, motor parts, sockets, plugs, capacitors, various cases, resistors, electrical and electronic parts incorporating metal terminals and conducting wires, computer-related parts, voice parts such as audio parts, illumination parts, telegraphic instrument-related parts, telephone equipment-related parts, air conditioner parts, parts for home electrical appliance such as VTRs and televisions, copier parts, facsimile parts, parts for optical instruments, parts for automotive ignition systems, automobile connectors, and various automobile electrical components.

### Examples

Next, the present invention will be described in detail with reference to Examples, but is not limited thereto. In the resin names listed below, the symbol "/" represents copolymerization, EG is an abbreviation for ethylene glycol, and CHDM is an abbreviation for 1,4-cyclohexanedimethanol.

The abbreviations for the main raw materials used in the examples and their details are summarized below.

Polybutylene terephthalate-based resin (A)
A-1: Polybutylene terephthalate (carboxylic acid group concentration (CV), 18 eq/t; intrinsic viscosity as measured at 25°C using o-chlorophenol solution as a solvent, 0.80 dL/g).
A-2: Polybutylene terephthalate (carboxylic acid group concentration (CV), 25 eq/t; intrinsic viscosity as measured at 25°C using o-chlorophenol solution as a solvent, 0.80 dL/g).
A-3: Polybutylene terephthalate (carboxylic acid group concentration (CV), 38 eq/t; intrinsic viscosity as measured at 25°C using o-chlorophenol solution as a solvent, 0.80 dL/g).
A-4: Polybutylene terephthalate chemically combined with the monovalent aliphatic alcohol obtained by the following production example (a carboxylic acid group concentration (CV), 35 eq/t; intrinsic viscosity as measured at 25°C using o-chlorophenol solution as a solvent, 0.80 dL/g).

### [Production examples]

The molar ratio of the diol component and the dicarboxylic acid component in the esterification reaction (diol component/dicarboxylic acid component ) was set to 1.5, and 2000 g of terephthalic acid as the dicarboxylic acid component, 1627 g of 1,4-butanediol as the diol component, 49 g (1.5 mol% with respect to 100 mol% of terephthalic acid) of 2-hexyl-1-dodecanol as the branched saturated aliphatic alcohol, and 7.5 × 10⁻⁵ mole of tetra-n-butyl titanate (TBT) as the esterification reaction catalyst with respect to 100 g of the produced polybutylene terephthalate (0.025 parts by weight with respect to 100 parts by weight of the produced polybutylene terephthalate) were charged in a reactor equipped with a rectification column, and the esterification reaction was started at a temperature of 160°C under a nitrogen flow. Then, the temperature was gradually, and the esterification reaction was performed finally at 225°C. The completion of the esterification reaction was confirmed by the state of the distillate or the like, and the reaction time of the esterification reaction was determined for 220 minutes. To the resulting reaction product was added 7.5 × 10⁻⁵ mole of TBT with respect to 100 g of the produced polybutylene terephthalate (0.025 parts by weight with respect to 100 parts by weight) as the polycondensation reaction catalyst, and the polycondensation reaction was performed at the temperature of 260°C and pressure of 100 Pa. The completion of the polycondensation reaction was confirmed by viscosity of the reaction product or the like, the reaction time of the polycondensation reaction for obtaining polybutylene terephthalate was set to 140 minutes, and the reaction was performed for 360 minutes in total to obtain polybutylene terephthalate (A-4).

Polyester resin (B) containing 50 to 90 mol% of a structure in which a terephthalic acid residue and a 1,4-cyclohexanedimethanol residue are bonded (PCTG-based resin (B) in Tables)
B-1: manufactured by Eastman Chemical Company, "EASTAR" DN011 (EG/CHDM = 29/71 mol%)

Resin (B'), not classified as the polyester resin (B), containing 50 to 90 mol% of a structure in which a terephthalic acid residue and a 1,4-cyclohexanedimethanol residue are bonded
B'-1: manufactured by Eastman Chemical Company, "EASTAR" GN002M (EG/CHDM = 68/32 mol%)
B'-2: Polycarbonate resin (manufactured by Idemitsu Kosan Co., Ltd., "TARFLON" A1900)

### Nucleating agent (C)

C-1: Talc, manufactured by Takehara Chemical Industrial Co., Ltd., P Talc (average particle size, 9 µm)
C-2: Talc, manufactured by Takehara Chemical Industrial Co., Ltd., High toron (average particle size, 6 µm)
C-3: Talc, manufactured by Takehara Chemical Industrial Co., Ltd., High toron A (average particle size, 3 µm)
C-4: Talc, manufactured by FUKUOKA TALC CO., LTD., FT-96 (average particle size, 12 µm)

### Chain coupling agent (D)

D-1: Epoxy compound (manufactured by Mitsubishi Chemical Corp., jER828) produced from bisphenol A and epichlorohydrin
D-2: Cresol-novolac type epoxy resin (manufactured by Nippon Kayaku Co., Ltd., EOCN104S)
D-3:dicyclopentadiene type epoxy resin (manufactured by DIC Corporation, HP7200H)
D-4:polycarbodiimide compound (manufactured by Nisshinbo Chemical Inc., CARBODILITE LA-1).

### Fibrous reinforcing filler (E)

E-1: Chopped strand type glass fiber with round cross-section (fiber diameter 13 µm).

### Other compounds (F)

F-1: Phosphorus-based stabilizer (manufactured by ADEKA Corp., "ADK STAB"AX-71)

### The evaluation methods used in Examples and Comparative Examples are summarized below.

### (1) Carboxylic acid group concentration of thermoplastic polyester resin composition

Approximately 2 g of the thermoplastic polyester resin composition was dissolved in 50 mL of chloroform/o-cresol (mixing volume ratio = 1/2) regulating agent. To this solution was added an appropriate amount of a bromothymol blue/ethanol solution, which was then titrated with a 0.02 N KOH ethanol solution to calculate the carboxylic acid group concentration (unit: eq/t).

### (2) Melting point and cold crystallization temperature of thermoplastic polyester resin composition

Approximately 10 mg of the thermoplastic polyester resin composition was sampled and measured under a nitrogen atmosphere using a differential scanning calorimeter DSC7 manufactured by PerkinElmer, Inc. The thermoplastic polyester resin composition was heated up to 250°C at a heating rate of 20 °C/min to a molten state, then cooled to 30°C at a cooling rate of 20 °C/min, and a temperature at the maximum of the exothermic peak observed at that time was taken as the cold crystallization temperature, then heated at a heating rate of 20 °C/min, and the temperature at the maximum of the endothermic peak observed at that time was determined as a melting point.

### (3) Average diameter of spherulites of polybutylene terephthalate-based resin (A)

A rectangular plate-like molded product of 80 mm width × 80 mm length × 1 mmt thickness was molded using a NEX1000 injection molding machine manufactured by NISSEI PLASTIC INDUSTRIAL CO., LTD. and a mold including 0.8 mmt film gate and a cavity of 80 mm width × 80 mm length × 1 mmt thickness, under temperature conditions: molding temperature of 280°C and mold temperature of 80°C; injection rate condition of 50 mm/s; molding cycle conditions: total of 10 seconds including injection time and retention time, and cooling time, 10 seconds. An ultrathin sections were cut from the center of the rectangular plate-like molded product using an ultramicrotome, and stained with ruthenium tetroxide to prepare a sample for observation. The sample was observed using Transmission Electron Microscope H-7100 manufactured by Hitachi, Ltd. at a magnification of 1,000 to 5,000. Ten images of spherulites were arbitrarily selected from the obtained photographs, and the arithmetic mean was calculated. The diameter of each spherulite was determined by calculating the average value of the major and minor axes of the spherulites present in the electron micrograph using the image analysis software "Scion Image" manufactured by Scion Corporation.

### (4) Variation/magnitude of laser transmittance

A test specimen of 80 mm width × 80 mm length × 1 mmt thickness for evaluation of laser transmission was molded using a NEX1000 injection molding machine manufactured by NISSEI PLASTIC INDUSTRIAL CO., LTD. under the same molding conditions as for the rectangular plate-like molded product in (3). An UV-NIR spectrophotometer (UV-3150) manufactured by SHIMADZU CORPORATION was used. As shown in FIG. 1, point A is the center on the side of the test specimen 1 in contact with the gate part 2, and point B and point C are points shifted 13 mm and 67 mm to the opposite side of the gate part from point A, respectively. At each of points B and C, laser transmittance at a wavelength of 940 nm, which is of a near-infrared light, was measured. The magnitude of variation in laser transmittance was indicated by the absolute value of the difference in transmittance between points B and C, and the magnitude of laser transmittance was evaluated as the average value of the transmittance between points B and C. The transmittance was indicated as a percentage of the ratio of the transmitted light volume and the incident light volume. The magnitude of variation in laser transmittance more than 30% was determined as inferior. The smaller magnitude of variation in laser transmittance was determined as better, especially 25% or less was determined as excellent, and 20% or less was determined more excellent. The magnitude of laser transmittance less than 20% was determined as inferior. The greater magnitude of laser transmittance was determined as better, 30% or more was determined as more excellent, and 40% or more was determined as still more excellent.

### (5) Tensile strength

A test specimen for evaluation of tensile properties of an ISO-1A dumbbell with a test specimen thickness of 4 mmt was obtained using a NEX1000 injection molding machine manufactured by NISSEI PLASTIC INDUSTRIAL CO., LTD. under temperature conditions: molding temperature of 250°C and mold temperature of 80°C; injection rate condition: 50 mm/s; and molding cycle conditions: total of 10 seconds including injection time and retention time, and cooling time, 10 seconds. In addition, the resulting test specimen for evaluation of tensile properties were measured for strength at maximum tension (tensile strength) according to ISO 527-1, 2 (2012) using a tensile tester (Autograph AG-50kN XPlus) manufactured by SHIMADZU CORPORATION. The value was an average value of measurements for three specimens. Materials with higher tensile strength values were determined to have superior mechanical properties.

### (6) Heat resistance

A test specimen of 80 mm length × 10 mm width × 4 mm thickness for evaluation of heat deformation temperature was obtained using a NEX1000 injection molding machine manufactured by NISSEI PLASTIC INDUSTRIAL CO., LTD. under the same injection molding conditions as for tensile properties in (5). Heat deformation temperature was measured according to ISO75 (2013) using the resulting test specimen for evaluation of heat deformation temperature, under conditions at a measurement load of 0.45 MPa when the fibrous reinforcing filler (E) was not included. Heat deformation temperature was measured under conditions at a measurement load of 1.8 MPa when the fibrous reinforcing filler (E) was included. In both cases, the value was an average value of measurements for three specimens. The material without the fibrous reinforcing filler (E) included therein was determined inferior when the heat deformation temperature was less than 80°C, and the material with the fibrous reinforcing filler (E) included therein was determined inferior when the heat deformation temperature was less than 150°C. The material with higher heat deformation temperature was determined to be excellent in heat resistance. The material without the fibrous reinforcing filler (E) included therein was determined to be excellent when the heat deformation temperature was 100°C or more, and the material with the fibrous reinforcing filler (E) included therein was determined to be excellent when the heat deformation temperature was 170°C or more.

### (7) Hydrolysis resistance

An ISO-1A dumbbell test specimen with test specimen thickness of 4 mmt for evaluation of tensile properties was obtained using a NEX1000 injection molding machine manufactured by NISSEI PLASTIC INDUSTRIAL CO., LTD. under the same injection molding conditions as for tensile properties in (5). The resulting ISO dumbbell was placed in a highly accelerated stress test chamber EHS-411 manufactured by ESPEC CORP. for 50 hours, which had been set at the temperature and humidity of 121°C × 100%RH, and subjected to heat-moisture treatment. The molded product after the heat-moisture treatment was measured for strength at maximum tension under the same conditions as those in the tensile test in (5), and the measurements for three specimens were averaged. The value of the strength at maximum tension after the heat-moisture treatment relative to the strength at maximum tension without the heat-moisture treatment, expressed as a percentage, was taken as a tensile strength retention rate ((strength at maximum tension after heat-moisture treatment / strength at maximum tension without heat-moisture treatment) × 100 = tensile strength retention rate (%)).

A material with a tensile strength retention rate of less than 50% was determined to have poor hydrolysis resistance, and a material with higher tensile strength retention rate was determined to be excellent. Particularly, tensile strength retention rate of 60% or more was determined as more excellent, 70% or more was determined as even more excellent.

### (8) Dimensional stability

A rectangular plate-like molded product of 80 mm width × 80 mm length × 1 mmt thickness, obtained in (3) using a NEX1000 injection molding machine manufactured by NISSEI PLASTIC INDUSTRIAL CO., LTD., was heat treated at the temperature of 150°C for 3 hours in a hot air oven PVH222 manufactured by ESPEC CORP. Thereafter, one corner of the rectangular plate was pressed on a surface plate, and the amount of uplift of the opposing corner was evaluated as a warpage amount. The specimen with a warpage amount of more than 12.0 mm after heat treatment was determined to have poor dimensional stability, while a specimen with a smaller warpage amount was determined to be more excellent in dimensional stability. A specimen with a warpage amount of 10.0 mm or less after the heat treatment was determined to be more excellent in dimensional stability, and a specimen with a warpage amount of 8.0 mm or less was determined to be even more excellent.

### (Examples 1 to 4, Comparative Examples 1 to 4)

Using a L/D35 co-rotating twin screw extruder having a screw diameter of 57 mm equipped with a vent, a polybutylene terephthalate-based resin (A), a polyester resin (B) containing 50 to 90 mol% of a structure in which a terephthalic acid residue and a 1,4-cyclohexanedimethanol residue are bonded, and other raw materials were mixed in the compositions shown in Table 1 and Table 3, and added from the breech-loading part of the twin screw extruder. Melt kneading was performed under extrusion conditions at the kneading temperature of 250°C and screw rotation of 200 rpm, and the discharge amount of the resin composition was set to 500 kg/hr, then the raw material was discharged in a strand form, passed through a cooling bath, and pelletized with a strand cutter. As for the molten resin temperature at the discharge part, a digital thermocouple thermometer (K type) manufactured by A&D Company, Limited, was used. A thermocouple was pressed against the molten resin at the discharge part at the tip of the extrusion die for 30 seconds, and the temperature indicated was taken as the molten resin temperature at the discharge part.

The resulting pellets were dried in a hot air oven at a temperature of 110°C for 6 hours, and evaluated by the method described above. The results are shown in Tables 1 and 3.

### (Examples 5 to 22, Comparative Examples 5 to 10)

Using a L/D35 co-rotating twin screw extruder having a screw diameter of 57 mm equipped with a vent, a polybutylene terephthalate-based resin (A), a polyester resin (B) containing 50 to 90 mol% of a structure in which a terephthalic acid residue and a 1,4-cyclohexanedimethanol residue are bonded, and other raw materials were mixed in the compositions shown in Tables 1 to 3, and added from the breech-loading part of the twin screw extruder. Note that the fibrous reinforcing filler (E) was added with a side feeder being provided in the middle of a breech-loading part and a vent. Melt kneading was performed under extrusion conditions at the kneading temperature of 250°C and screw rotation of 200 rpm, and the discharge amount of the resin composition was set to 300 kg/hr, then the raw material was discharged in a strand form, passed through a cooling bath, and pelletized with a strand cutter. As for the molten resin temperature at the discharge part, a digital thermocouple thermometer (K type) manufactured by A&D Company, Limited, was used. A thermocouple was pressed against the molten resin at the discharge part at the tip of the extrusion die for 30 seconds, and the temperature indicated was taken as the molten resin temperature at the discharge part.

The resulting pellets were dried in a hot air oven at a temperature of 110°C for 6 hours, and evaluated by the method described above. The results are shown in Tables 1 to 3.

### (Example 23)

In the same manner except that the screw rotation was set to 150 rpm and the discharge amount of the resin composition was set to 200 kg/hr in order to suppress the resin temperature rise due to heat generated by shearing in the melt kneading conditions of Comparative Example 5, melt kneading was performed, followed by evaluation. The results are shown in Table 2.

### (Example 24)

In the same manner except that the screw rotation was set to 150 rpm and the discharge amount of the resin composition was set to 200 kg/hr in order to suppress the resin temperature rise due to heat generated by shearing in the melt kneading conditions of Example 7, melt kneading was performed, followed by evaluation. The results are shown in Table 2.

### [Table 1]

**Table 1**

| | | | Example 1 | Example 2 | Example 3 | Example 4 | Example 5 | Example 6 | Example 7 | Example 8 | Example 9 | Example 10 |
|---|---|---|---|---|---|---|---|---|---|---|---|---|
| (A) Polybutylene terephthalate-based resin | (A-1) Polybutylene terephthalate (CV = 18 eq/t) | parts by weight | 100 | - | - | 100 | 100 | 100 | 100 | 100 | 100 | 100 |
| | (A-2) Polybutylene terephthalate (CV = 25 eq/t) | parts by weight | - | 100 | - | - | - | - | - | - | - | - |
| | (A-3) Polybutylene terephthalate (CV = 38 eq/t) | parts by weight | - | - | 100 | - | - | - | - | - | - | - |
| (B) PCTG-based resin | (B-1) DN011 (EG/CHDM = 29/71 mol%) | parts by weight | 55 | 55 | 55 | 55 | 20 | 40 | 50 | 70 | 50 | 50 |
| (B') Resin not classified as component (B) | (B'-1) GN002M EG/CHDM = 68/32 mol%) | parts by weight | - | - | - | - | - | - | - | - | - | - |
| | (B'-2) Polycarbonate resin | parts by weight | - | - | - | - | - | - | - | - | - | - |
| (C) Nucleating agent | (C-1) Talc (Average particle size 9µm) | parts by weight | - | - | 0.1 | 0.1 | - | - | - | - | 0.1 | - |
| | (C-2) Talc (Average particle size | parts by weight | - | - | - | - | - | - | - | - | - | - |
| | 6pm) | | | | | | | | | | | |
| | (C-3) Talc (Average particle size 3µm) | parts by weight | - | - | - | - | - | - | - | - | - | - |
| | (C-4) Talc (Average particle size 12µm) | parts by weight | - | - | - | - | - | - | - | - | - | - |
| (D) Chain coupling agent | (D-1) jER828 | parts by weight | - | - | 1.0 | - | - | - | - | - | - | 1.0 |
| | (D-2) EOCN104S | parts by weight | - | - | - | - | - | - | - | - | - | - |
| | (D-3) HP7200H | parts by weight | - | - | - | - | - | - | - | - | - | - |
| | (D-4) CARBODILITE LA-1 | parts by weight | - | - | - | - | - | - | - | - | - | - |
| (E) Fibrous reinforcing filler | (E-1) Glass fiber | parts by weight | - | - | - | - | 51 | 60 | 65 | 72 | 65 | 65 |
| (F) Other compound | (F-1) AX-71 | parts by weight | - | - | - | - | - | - | - | - | - | - |
| Resin temperature during melt kneading | | °C | 316 | 316 | 316 | 316 | 321 | 321 | 321 | 321 | 321 | 321 |
| Carboxylic acid group concentration of thermoplastic polyester resin composition | | eq/t | 22 | 28 | 29 | 29 | 23 | 23 | 21 | 20 | 22 | 22 |
| Melting point in thermoplastic polyester resin composition | | °C | 223 | 225 | 222 | 226 | 224 | 223 | 222 | 222 | 222 | 225 |
| Cold crystallization temperature of thermoplastic polyester resin composition | | °C | 175 | 173 | 174 | 181 | 190 | 186 | 182 | 173 | 189 | 181 |
| Average diameter of spherulites | | nm | 313 | 345 | 561 | 698 | 772 | 614 | 448 | 288 | 525 | 456 |
| Variation in laser transmittance | Transmittance difference between B and C | % | 26 | 28 | 29 | 15 | 10 | 23 | 26 | 29 | 12 | 24 |
| Magnitude of laser transmittance | Average transmittance at B and C | % | 38 | 33 | 26 | 31 | 21 | 25 | 41 | 49 | 35 | 43 |
| Tensile strength | | MPa | 55 | 54 | 52 | 52 | 143 | 141 | 140 | 140 | 141 | 141 |
| Heat resistance | Heat deformation temperature | °C | 90 | 85 | 82 | 105 | 205 | 193 | 162 | 151 | 190 | 166 |
| Hydrolysis resistance | Tensile strength retention rate | % | 72 | 65 | 64 | 70 | 58 | 59 | 57 | 55 | 58 | 58 |
| Dimensional stability | Warpage amount after heat treatment | mm | 8.2 | 8.4 | 10.6 | 6.4 | 10.0 | 11.0 | 10.4 | 10.2 | 8.2 | 10.2 |

### [Table 2]

**Table 2**

| | | | Exam ple 11 | Exam ple 12 | Exam ple 13 | Exam ple 14 | Exam ple 15 | Exam ple 16 | Exam ple 17 | Exam ple 18 | Exam ple 19 | Exam ple 20 | Exam ple 21 | Exam ple 22 | Exam ple 23 | Exam ple 24 |
|---|---|---|---|---|---|---|---|---|---|---|---|---|---|---|---|---|
| (A) Polybutyl ene terephthal ate-based resin | (A-1) Polybutylene terephthalate (CV = 18 eq/t) | parts by weig ht | 100 | 100 | 100 | 100 | 100 | 100 | 100 | 100 | - | 100 | - | - | - | 100 |
| | (A-2) Polybutylene terephthalate (CV = 25 eq/t) | parts by weig ht | - | - | - | - | - | - | - | - | - | - | - | - | - | - |
| | (A-3) Polybutylene terephthalate (CV = 38 eq/t) | parts by weig ht | - | - | - | - | - | - | - | - | - | - | 100 | 100 | 100 | - |
| | (A-4) Polybutylene terephthalate (CV=35 eq/t) | parts by weig ht | - | - | - | - | - | - | - | - | 100 | - | - | - | - | - |
| (B) PCTG-based resin | (B-1) DN011 (EG/CHDM = 29/71 mol%) | parts by weight | 50 | 50 | 50 | 50 | 50 | 50 | 50 | 50 | 50 | 50 | 50 | 50 | 50 | 50 |
| ((B') Resin not classified as componen t (B) | (B'-1) GN002M EG/CHDM = 68/32 mol%) | parts by weig ht | - | - | - | - | - | - | - | - | - | - | - | - | - | - |
| | (B'-2) Polycarbona te resin | parts by weig ht | - | - | - | - | - | - | - | - | - | - | - | - | - | - |
| (C) Nucleatin g agent | (C-1) Talc (Average particle size 9µm) | parts by weig ht | 0.1 | 0.1 | 0.1 | 0.1 | - | - | - | - | 0.1 | - | - | 0.1 | - | - |
| | (C-2) Talc (Average particle size 6µm) | parts by weig ht | - | - | - | - | 0.1 | - | - | - | - | - | - | - | - | - |
| | (C-3) Talc (Average particle size 3µm) | parts by weig ht | - | - | - | - | - | 0.1 | - | 0.4 | - | 1.0 | - | - | - | - |
| | (C-4) Talc (Average particle size 12 µm) | parts by weig ht | - | - | - | - | - | - | 0.1 | - | - | - | - | - | - | - |
| (D) Chain coupling agent | (D-1) jER828 | parts by weig ht | 1.0 | - | - | - | - | - | - | - | - | - | - | - | - | - |
| | (D-2) EOCN 1045 | parts by weight | - | 1.0 | - | - | - | - | - | - | - | - | - | - | - | - |
| | (D-3) HP7200H | parts by weig ht | - | - | 1.0 | - | 1.0 | 1.0 | 1.0 | 1.0 | 1.0 | 1.0 | 1.0 | 1.0 | - | - |
| | (D-4) CARBODIL ITE LA-1 | parts by weig ht | - | - | - | 1.0 | - | - | - | - | - | - | - | - | - | - |
| (E) Fibrous reinforcin g filler | (E-1) Glass fiber | parts by weig ht | 65 | 65 | 65 | 65 | 65 | 65 | 65 | 65 | 65 | 65 | 65 | 65 | 65 | 65 |
| (F) Other compound | (F-1) AX-71 | parts by weig ht | - | - | - | - | - | - | - | - | - | - | 0.1 | - | - | - |
| Resin temperature during melt kneading | | °C | 321 | 321 | 321 | 321 | 321 | 321 | 321 | 321 | 321 | 321 | 321 | 321 | 305 | 303 |
| Carboxylic acid group concentration in thermoplastic polyester resin composition | | eq/t | 18 | 16 | 15 | 16 | 18 | 18 | 18 | 17 | 20 | 18 | 32 | 32 | 28 | 19 |
| Melting point of thermoplastic polyester resin composition | | °C | 226 | 225 | 226 | 222 | 225 | 225 | 222 | 225 | 228 | 226 | 222 | 222 | 222 | 224 |
| Cold crystallization temperature of thermoplastic polyester resin composition | | °C | 193 | 192 | 193 | 185 | 194 | 194 | 181 | 195 | 189 | 199 | 170 | 176 | 171 | 185 |
| Average diameter of spherulites | | nm | 527 | 528 | 526 | 531 | 501 | 487 | 560 | 543 | 448 | 817 | 193 | 284 | 436 | 442 |
| Variation in laser transmitta nce | Transmittan ce difference between B and C | % | 12 | 12 | 11 | 21 | 11 | 10 | 22 | 8 | 11 | 7 | 29 | 25 | 28 | 22 |
| Magnitude of laser transmitta nce | Average transmittance of B and C | % | 35 | 33 | 32 | 28 | 35 | 38 | 27 | 35 | 37 | 30 | 39 | 36 | 43 | 38 |
| Tensile strength | | MPa | 141 | 140 | 141 | 140 | 141 | 141 | 141 | 141 | 140 | 139 | 134 | 136 | 130 | 140 |
| Heat resistance | Heat deformation temperature | °C | 190 | 189 | 191 | 165 | 192 | 193 | 182 | 193 | 192 | 194 | 155 | 160 | 152 | 171 |
| Hydrolysis resistance | Tensile strength retention rate | % | 68 | 75 | 78 | 65 | 78 | 78 | 62 | 65 | 77 | 64 | 57 | 62 | 53 | 65 |
| Dimensio nal stability | Warpage amount after heat treatment | mm | 6.8 | 6.2 | 6.4 | 9.0 | 6.0 | 5.8 | 7.8 | 6.4 | 5.7 | 6.1 | 10.5 | 9.8 | 10.9 | 9.0 |

### [Table 3]

**Table 3**

| | | | Comparat ive Example 1 | Comparat ive Example 2 | Comparat ive Example 3 | Comparat ive Example 4 | Comparat ive Example 5 | Comparat ive Example 6 | Comparat ive Example 7 | Comparat ive Example 8 | Comparat ive Example 9 | Comparat ive Example 10 |
|---|---|---|---|---|---|---|---|---|---|---|---|---|
| (A) Polybutyl ene terephthal ate-based resin | (A-1) Polybutylen e terephthalat e (CV = 18 eq/t) | parts by weig ht | - | - | - | - | - | - | 100 | 100 | 100 | 100 |
| | (A-2) Polybutylen e terephthalat e (CV = 25 eq/t) | parts by weig ht | - | - | - | - | - | - | - | - | - | - |
| | (A-3) Polybutylen e terephthalat e (CV = 38 eq/t) | parts by weig ht | 100 | 100 | 100 | 100 | 100 | 100 | - | - | - | - |
| (B) PCTG-based resin | (B-1) DN011 (EG/CHDM = 29/71 mol%) | parts by weig ht | 55 | 55 | 55 | 55 | 50 | 50 | - | - | 5 | 85 |
| (B') Resin not classified as componen t (B) | (B'-1) GN002M EG/CHDM = 68/32 mol%) | parts by weig ht | - | - | - | - | - | - | 55 | - | - | - |
| | (B'-2) Polycarbona te resin | parts by weig ht | - | - | - | - | - | - | - | 55 | - | - |
| (C) Nucleatin g agent | (C-1) Talc (Average particle size 9 µm) | parts by weig ht | - | - | - | 0.1 | - | - | 0.1 | 0.1 | - | - |
| | (C-2) Talc (Average particle size 6 µm) | parts by weig ht | - | - | - | - | - | - | - | - | - | - |
| | (C-3) Talc (Average particle size 3 µm) | parts by weig ht | - | - | - | - | - | - | - | - | - | - |
| | (C-4) Talc (Average particle size 12µm) | parts by weig ht | - | - | - | - | - | - | - | - | - | - |
| (D) Chain coupling agent | (D-1) jER828 | parts by weig ht | - | - | 1.0 | - | - | - | - | - | - | - |
| | (D-2) EOCN104S | parts by weig ht | - | - | - | - | - | - | - | - | - | - |
| | (D-3) HP7200H | parts by weig ht | - | - | - | - | - | - | 1.0 | 1.0 | - | - |
| | (D-4) CARBODIL ITE LA-1 | parts by weig ht | - | - | - | - | - | - | - | - | - | - |
| (E) Fibrous reinforcin g filler | (E-1) Glass fiber | parts by weig ht | - | - | - | - | 65 | 65 | 65 | 65 | 51 | 78 |
| (F) Other compound | (F-1) AX-71 | parts by weig ht | - | 0.1 | 0.1 | 0.1 | - | 0.1 | 0.1 | 0.1 | - | - |
| Resin temperature during melt kneading | | °C | 316 | 316 | 317 | 316 | 320 | 320 | 319 | 325 | 321 | 321 |
| Carboxylic acid group concentration in thermoplastic polyester resin composition | | eq/t | 34 | 36 | 31 | 37 | 37 | 38 | 31 | 22 | 23 | 25 |
| Melting point of thermoplastic polyester resin composition | | °C | 220 | 220 | 221 | 220 | 219 | 220 | 235 | 218 | 224 | 222 |
| Cold crystallization temperature of thermoplastic polyester resin composition | | °C | 166 | 169 | 167 | 174 | 163 | 164 | 205 | 158 | 195 | 173 |
| Average diameter of spherulites | | nm | 94 | 124 | 126 | 153 | 155 | 190 | 833 | 87 | 1225 | 54 |
| Variation in laser transmitta nce | Transmittan ce difference between B and C | % | 43 | 41 | 36 | 34 | 45 | 36 | 25 | 55 | 10 | 74 |
| Magnitud e of laser transmitta nce | Average transmittanc e of B and C | % | 46 | 45 | 44 | 38 | 42 | 41 | 19 | 33 | 8 | 65 |
| Tensile strength | | MPa | 54 | 52 | 52 | 51 | 133 | 134 | 135 | 120 | 140 | 128 |
| Heat resistance | Heat deformation temperature | °C | 66 | 74 | 70 | 73 | 123 | 134 | 148 | 120 | 210 | 101 |
| Hydrolysi s resistance | Tensile strength retention rate | % | 29 | 25 | 43 | 26 | 42 | 43 | 20 | 25 | 36 | 27 |
| Dimensio nal stability | Warpage amount after heat treatment | mm | 14.2 | 14.1 | 14.0 | 13.9 | 15.1 | 12.7 | 14.2 | 15.0 | 12.2 | 13.4 |

The comparison of Examples 1 to 4 with Comparative Examples 1 to 4 and the comparison of Examples 5 to 8 with Comparative Examples 5, 6, 9, and 10 show that a thermoplastic polyester resin composition including 10 parts by weight or more and 80 parts by weight or less of a polyester resin (B) containing 50 to 90 mol% of a structure in which a terephthalic acid residue and a 1,4-cyclohexanedimethanol residue are bonded, with respect to 100 parts by weight of a polybutylene terephthalate-based resin (A), having less variation in laser transmittance within a molded product, and also having high laser transmission, and further having excellent mechanical strength, heat resistance, hydrolysis resistance, and dimensional stability can be obtained by setting a melting point to 222°C or more and 230°C or less as measured using a differential scanning calorimeter at heating and cooling rates of 20 °C/min, and a cold crystallization temperature to 170°C or more and 200°C or less as measured under the same condition.

The comparison of Example 16 with Example 20 and the comparison of Example 7 with Example 21 show that a thermoplastic polyester resin composition having an excellent balance between the laser transmission and suppression of variation in laser transmittance can be obtained when an average diameter of spherulites of the polybutylene terephthalate-based resin observed with a transmission electron microscope is 200 nm or more and 800 nm or less.

The comparison of Examples 1 to 4 with Comparative Examples 1 to 4 and the comparison of Example 13 with Examples 21 and 22 show that a thermoplastic polyester resin composition enabling suppression of variation in laser transmittance while maintaining high laser transmission, and having excellent heat resistance and dimensional stability can be obtained when the carboxyl group content in the thermoplastic polyester resin composition is 30 eq/t or less.

The comparison of Example 4 with Example 1 and the comparison of Example 9 with Example 7 and the comparison with Examples 13, 15 to 18, 20 show that a thermoplastic polyester resin composition enabling better suppression of variation in laser transmittance while maintaining high laser transmission and having excellent heat resistance can be obtained by further including 0.01 to 0.8 parts by weight of the nucleating agent (C) having average particle size of 10 µm or less.

The comparison of Example 3 with Comparative Example 4 and the comparison of Example 10 with Example 7 and the comparison of Examples 11 to 14 with Example 9 show that a thermoplastic polyester resin composition enabling better suppression of variation in laser transmittance while maintaining high laser transmission and having excellent heat resistance, hydrolysis resistance, and dimensional stability can be obtained by further including 0.1 to 5 parts by weight of the chain coupling agent (D) having any two or more groups selected from the group consisting of epoxy groups, isocyanate groups, carbodiimide groups, oxazoline groups, and acid anhydride groups.

The comparison of Examples 5 to 8 with Example 1 shows that a thermoplastic polyester resin composition having more excellent strength and heat resistance can be obtained by further including 1 to 100 parts by weight of the fibrous reinforcing filler (E).

The comparison of Examples 12 and 13 with Examples 11 and 14 shows that a thermoplastic polyester resin composition enabling suppressing variation in laser transmittance while having excellent laser transmission and having more excellent hydrolysis resistance and dimensional stability can be obtained when the chain coupling agent (D) is a cresol-novolac type epoxy resin or a dicyclopentadiene type epoxy resin.

The comparison of Example 19 with Example 13 shows that a thermoplastic polyester resin composition excellent in terms of variation in laser transmittance, maintaining heat resistance and hydrolysis resistance, and having more excellent laser transmission and dimensional stability can be obtained when the polybutylene terephthalate-based resin (A) includes a particular aliphatic alcohol compounded therein.

The comparison of Example 23 with Comparative Example 5 and the comparison of Example 24 and Example 7 show that a thermoplastic polyester resin composition enabling suppression of variation in laser transmittance while being excellent in laser transmission, and having more excellent hydrolysis resistance and dimensional stability can be obtained by a method of producing a thermoplastic polyester resin composition including melt kneading while controlling the molten resin temperature at the discharge part to 315°C or less.

### Reference Signs List

- 1: Test specimen for evaluation of laser transmission
- 2: Gate part

## Claims

1. A thermoplastic polyester resin composition, comprising 10 parts by weight or more and 80 parts by weight or less of a polyester resin (B) containing 50 to 90 mol% of a structure in which a terephthalic acid residue and a 1,4-cyclohexanedimethanol residue are bonded, with respect to 100 parts by weight of a polybutylene terephthalate-based resin (A),
wherein the thermoplastic polyester resin composition has a melting point of 222°C or more and 230°C or less as measured using a differential scanning calorimeter at heating and cooling rates of 20 °C/min, and has a cold crystallization temperature of 170°C or more and 200°C or less as measured under the same condition.

2. The thermoplastic polyester resin composition according to claim 1, wherein an average diameter of spherulites of the polybutylene terephthalate-based resin observed with a transmission electron microscope is 200 nm or more and 800 nm or less.

3. The thermoplastic polyester resin composition according to claim 1 or 2, wherein a carboxyl group content determined by titration with ethanolic potassium hydroxide after dissolving the composition in an o-cresol/chloroform solvent (mixing volume ratio = 2/1) is 30 eq/t or less.

4. The thermoplastic polyester resin composition according to any one of claims 1 to 3, further comprising 0.01 to 0.8 parts by weight of a nucleating agent (C) having an average particle size of 10 µm or less, with respect to 100 parts by weight of the polybutylene terephthalate-based resin (A).

5. The thermoplastic polyester resin composition according to any one of claims 1 to 4, further comprising 0.1 to 5 parts by weight of a chain coupling agent (D) having any two or more groups selected from the group consisting of epoxy groups, isocyanate groups, carbodiimide groups, oxazoline groups, and acid anhydride groups, with respect to 100 parts by weight of the polybutylene terephthalate-based resin (A).

6. The thermoplastic polyester resin composition according to claim 5, wherein the chain coupling agent (D) is a cresol-novolac type epoxy resin, or a dicyclopentadiene type epoxy resin.

7. The thermoplastic polyester resin composition according to any one of claims 1 to 6, further comprising 1 to 100 parts by weight of a fibrous reinforcing filler (E), with respect to 100 parts by weight of the polybutylene terephthalate-based resin (A).

8. The thermoplastic polyester resin composition according to any one of claims 1 to 7, wherein the polybutylene terephthalate-based resin (A) is a polybutylene terephthalate resin chemically combined with monovalent aliphatic alcohol having carbon number of 10 or more and 50 or less in an amount of 0.1 to 2.0 mol% with respect to 100 mol% of terephthalic acid-derived structural units.

9. A method of producing the thermoplastic polyester resin composition according to any one of claims 1 to 8, comprising:
providing the polybutylene terephthalate-based resin (A), the polyester resin (B) containing 50 to 90 mol% of the structure in which the terephthalic acid residue and the 1,4-cyclohexanedimethanol residue are bonded, and components to be added thereto as needed; and
melt kneading these resins and additives with a molten resin temperature at a discharge part being controlled to 315°C or less.

10. A molded product including the thermoplastic polyester resin composition according to any one of claims 1 to 8.

## Patentansprüche

1. Thermoplastische Polyesterharz-Zusammensetzung, die 10 Gewichtsteile oder mehr und 80 Gewichtsteile oder weniger eines Polyesterharzes (B), das 50 bis 90 Mol-% einer Struktur enthält, in der ein Terephthalsäure-Rest und ein 1,4-Cyclohexandimethanol-Rest miteinander verbunden sind, bezogen auf 100 Gewichtsteile eines Harzes (A) auf Polybutylenterephthalat-Basis umfasst;
wobei die thermoplastische Polyesterharz-Zusammensetzung einen Schmelzpunkt von 222 °C oder mehr und 230 °C oder weniger aufweist, der unter Verwendung eines dynamischen Differenzkalorimeters bei Heiz- und Kühlraten von 20 °C/min gemessen wird, und die eine Kaltkristallisations-Temperatur von 170 °C oder mehr und 200 °C oder weniger aufweist, die unter denselben Bedingungen gemessen wird.

2. Thermoplastische Polyesterharz-Zusammensetzung nach Anspruch 1, wobei der mittlere Durchmesser von Spärolithen des Harzes auf Polybutylenterephthalat-Basis, die mit einem Transmissions-Elektronenmikroskop beobachtet werden, 200 nm oder mehr und 800 nm oder weniger beträgt.

3. Thermoplastische Polyesterharz-Zusammensetzung nach Anspruch 1 oder 2, wobei der Gehalt an Carboxylgruppen, der durch Titration mit Ethanolkaliumhydroxid nach Lösen der Zusammensetzung in einem o-Kresol-/Chloroform-Lösungsmittel (Mischung in einem Volumenverhältnis von 2/1) bestimmt wird, 30 Äqu./t oder weniger beträgt.

4. Thermoplastische Polyesterharz-Zusammensetzung nach einem der Ansprüche 1 bis 3, die weiters 0,01 bis 0,8 Gewichtsteile eines Keimbildners (C) mit einer mittleren Teilchengröße von 10 µm oder weniger, bezogen auf 100 Gewichtsteile des Harzes (A) auf Polybutylenterephthalat-Basis umfasst.

5. Thermoplastische Polyesterharz-Zusammensetzung nach einem der Ansprüche 1 bis 4, die weiters 0,1 bis 5 Gewichtsteile eines Kettenkupplungsmittels (D), das beliebige zwei oder mehr Gruppen, ausgewählt aus der aus Epoxygruppen, Isocyanatgruppen, Carbodiimidgruppen, Oxazolingruppen und Säureanhydridgruppen bestehenden Gruppe aufweist, bezogen auf 100 Gewichtsteile des Harzes (A) auf Polybutylenterephthalat-Basis umfasst.

6. Thermoplastische Polyesterharz-Zusammensetzung nach Anspruch 5, wobei das Kettenkupplungsmittel (D) ein Epoxidharz vom Kresol-Novolak-Typ oder ein Epoxidharz vom Dicyclopentadien-Typ ist.

7. Thermoplastische Polyesterharz-Zusammensetzung nach einem der Ansprüche 1 bis 6, die weiters 1 bis 100 Gewichtsteile eines faserförmigen Verstärkungsfüllstoffs (E), bezogen auf 100 Gewichtsteile des Harzes (A) auf Polybutylenterephthalat-Basis umfasst.

8. Thermoplastische Polyesterharz-Zusammensetzung nach einem der Ansprüche 1 bis 7, wobei das Harz (A) auf Polybutylenterephthalat-Basis ein Polybutylenterephthalat-Harz ist, das chemisch mit einwertigem aliphatischem Alkohol mit einer Kohlenstoffanzahl von 10 oder mehr und 50 oder weniger in einer Menge von 0,1 bis 2,0 Mol-%, bezogen auf 100 Mol-% der von Terephthalsäure abgeleiteten Struktureinheiten, kombiniert ist.

9. Verfahren zur Herstellung einer thermoplastischen Polyesterharz-Zusammensetzung nach einem der Ansprüche 1 bis 8, das Folgendes umfasst:
das Bereitstellen des Harzes (A) auf Polybutylenterephthalat-Basis, des Polyesterharzes (B), das 50 bis 90 Mol-% einer Struktur enthält, in der ein Terephthalsäure-Rest und ein 1,4-Cyclohexandimethanol-Rest miteinander verbunden sind, und von Komponenten, die je nach Bedarf dazu zugesetzt werden; und
das Schmelzkneten dieser Harze und Additive, wobei die Temperatur des geschmolzenen Harzes an einem Auslassabschnitt auf 315 °C oder weniger eingestellt wird.

10. Geschmolzenes Produkt, das eine thermoplastische Polyesterharz-Zusammensetzung nach einem der Ansprüche 1 bis 8 umfasst.

## Revendications

1. Composition de résine de polyester thermoplastique, comprenant 10 parties en poids ou plus et 80 parties en poids ou moins d'une résine de polyester (B) contenant de 50 à 90 % en mole d'une structure dans laquelle un résidu d'acide téréphtalique et un résidu de 1,4-cyclohexanediméthanol sont liés, par rapport à 100 parties en poids d'une résine à base de polybutylène téréphtalate (A),
dans laquelle la composition de résine polyester thermoplastique présente un point de fusion de 222°C ou plus et de 230°C ou moins tel que mesuré à l'aide d'un calorimètre à balayage différentiel à des vitesses de chauffage et de refroidissement de 20°C/min, et présente une température de cristallisation à froid de 170°C ou plus et de 200°C ou moins telle que mesurée dans les mêmes conditions.

2. Composition de résine de polyester thermoplastique selon la revendication 1, dans laquelle un diamètre moyen de sphérulites de la résine à base de polybutylène téréphtalate observée au microscope électronique en transmission est de 200 nm ou plus et de 800 nm ou moins.

3. Composition de résine de polyester thermoplastique selon la revendication 1 ou 2, dans laquelle une teneur en groupes carboxyle déterminée par titrage avec de l'hydroxyde de potassium éthanolique après dissolution de la composition dans un solvant o-crésol/chloroforme (rapport de volume de mélange = 2/1) est de 30 éq/t ou moins.

4. Composition de résine de polyester thermoplastique selon l'une quelconque des revendications 1 à 3, comprenant de plus de 0,01 à 0,8 partie en poids d'un agent de nucléation (C) ayant une taille de particule moyenne de 10 µm ou moins, par rapport à 100 parties en poids de la résine à base de polybutylène téréphtalate (A).

5. Composition de résine de polyester thermoplastique selon l'une quelconque des revendications 1 à 4, comprenant en outre de 0,1 à 5 parties en poids d'un agent de couplage de chaîne présentant deux groupes ou plus choisis dans le groupe constitué de groupes époxy, de groupes isocyanate, de groupes carbodiimide, de groupes oxazoline et de groupes anhydride d'acide, par rapport à 100 parties en poids de la résine à base de polybutylène téréphtalate (A).

6. Composition de résine de polyester thermoplastique selon la revendication 5, dans laquelle l'agent de couplage de chaîne (D) est une résine époxy de type crésol-novolaque ou une résine époxy de type dicyclopentadiène.

7. Composition de résine de polyester thermoplastique selon l'une quelconque des revendications 1 à 6, comprenant en outre de 1 à 100 parties en poids d'une charge de renforcement fibreuse (E), par rapport à 100 parties en poids de la résine à base de polybutylène téréphtalate (A).

8. Composition de résine de polyester thermoplastique selon l'une quelconque des revendications 1 à 7, dans laquelle la résine à base de polybutylène téréphtalate (A) est une résine de polybutylène téréphtalate combinée chimiquement à un alcool aliphatique monovalent présentant un nombre de carbone de 10 ou plus et de 50 ou moins en une quantité de 0,1 à 2,0 % en mole par rapport à 100 % en mole d'unités structurelles dérivées d'acide téréphtalique.

9. Procédé de production de la composition de résine de polyester thermoplastique selon l'une quelconque des revendications 1 à 8, comprenant les étapes consistant à :
fournir la résine à base de polybutylène téréphtalate (A), la résine de polyester (B) contenant 50 à 90 % en mole de la structure dans laquelle le résidu d'acide téréphtalique et le résidu de 1,4-cyclohexanediméthanol sont liés, et des composants à y ajouter au besoin ; et
malaxer à l'état fondu ces résines et additifs avec une température de résine fondue au niveau d'une partie de décharge commandée à 31°C ou moins.

10. Produit moulé incluant la composition de résine de polyester thermoplastique selon l'une quelconque des revendications 1 à 8.
